# EUROPEAN PATENT SPECIFICATION

(11) **EP 1 189 199 B1**
(45) Date of publication and mention of the grant of the patent: **27.06.2007**
(21) Application number: 00929850.6
(22) Date of filing: 24.05.2000
(51) Int. Cl.: G10K 15/04, G10L 11/00, G10K 15/02

(54) **SOUND GENERATOR AND METHOD FOR MANUFACTURING THE SAME**
TONGENERATOR UND VERFAHREN ZU DESSEN HERSTELLUNG
GENERATEUR DE SONS ET PROCEDE DE FABRICATION ASSOCIE

(30) Priority: 24.05.1999 JP 14307499; 10.03.2000 JP 2000067598
(43) Date of publication of application: 20.03.2002
(73) Proprietor: Ishii, Tatsuya, Kobe-shi, Hyogo 658-0051 (JP)
(72) Inventor: Ishii, Tatsuya, Kobe-shi, Hyogo 658-0051 (JP)
(74) Representative: Brown, Kenneth Richard
(86) International application number: PCT/JP2000/003320
(87) International publication number: WO 2000/072304

(56) References cited:
- JP-A- 59 022 081
- JP-U- 1 181 100
- JP-U- 58 081 702
- PATENT ABSTRACTS OF JAPAN vol. 006, no. 112 (P-124), 23 June 1982 (1982-06-23) -& JP 57 040705 A (TOKYO SUPPLY:KK), 6 March 1982 (1982-03-06)

## Description

### of the Invention

This invention relates to a sound generator capable of simply reproducing a voice and other sounds, which requires no electronic device, and is extremely simply constituted.

### Background of the Invention

Conventionally, as a device for generating sounds, there has been a music box that automatically generates music by clockwork and various electronic melody or voice generators, etc.

However, the conventional voice generator is only for generating sounds, and has a problem that its structure is complex and a high production cost is required, thus it becomes expensive. There is a voice generator that is completely different from the conventional voice generator, formed easily and at a low cost by only adding a simple processing to various articles, moreover everyone can extremely easily generate sounds, and the same has been disclosed in Utility Model laid-Open Publication No. Hei 5-71899.

The voice generator comprises an article with a spatial part capable of resonating sounds and a string body located near by the spatial part, wherein irregular parts, which generate sounds by rubbing it with the top of a nail, etc., are arranged and formed from the side of the spatial part to the side of a clearance edge on the surface of the string body. Sounds are generated from the irregular parts by rubbing it with the top of a nail, etc., and the sounds are amplified by resonance in the spatial part.

However, the above prior art only describes that "Sounds are generated from the irregular parts by rubbing it with the top of a nail, etc.,", and discloses nothing on how the voice generator may be structured to generate the requested sounds. In fact, it was found that the act of only establishing the irregular parts could not generate a voice or other requested sounds.

JP 57 040705 A discloses a recording medium comprising a tape or sheet on which an uneven pattern is recorded and can be rubbed to reproduce a sound.

The objective of this invention is to solve such problem and provide a technique capable of generating requested sounds from a sound generator/recording medium with an extremely simple structure that requires no electronic device.

### Disclosure of the Invention

A sound generator/recording medium in connection with this invention is for generating sounds by the vibration of each of the parts where a graphic image is recorded, when a vibrating member (a member comparatively easy to vibrate), carrying a graphic image resonating to frequency elements included in a voice and other sounds to be expressed, is vibrated. The vibrating member is, for example, a sheet made of paper, plastic, metal or the like, and selected from those that may be vibrated by a simple method such as simply rubbing them with a finger to realize the easy generation of sounds.

According to the invention there is provided a sound generator according to claim 1, comprising a recording medium bearing a surface pattern representing sounds to be reproduced by rubbing, wherein selected generated sounds are recorded on said recording medium in the form of a printed graphic image comprising a chart representing the results of a spectrum analysis of the selected generated sounds, in which frequency elements of the analysed sounds are plotted with respect to frequency and time, in that said graphic image is printed on said recording medium, and in that the recording medium is vibratable by rubbing the printed surface in a specific direction, so as to reproduce said sounds. Thereby, an easy generation of sounds are realized.

According to the invention there is also provided a method of manufacturing a sound generator according to claim 6, comprising a recording medium bearing a surface pattern representing sounds to be reproduced by rubbing, the method including selecting sounds to be recorded and generating the selected sounds, and comprising the steps: subjecting the selected generated sounds to a spectrum analysis; expressing the analysed sounds as a graphic image comprising a chart representing the results of the spectrum analysis, in which frequency elements of the analysed sound are plotted with respect to frequency and time; and printing said graphic image on said recording medium, whereby the recording medium is made vibratable by rubbing the printed surface in a specific direction, so as to reproduce said sounds.

The recording medium is a printable medium such as paper, plastic, metal or the like, and is applicable to a wide range of uses and easy for mass production.

As to images of the above graphics and sounds that are subjected to spectrum analysis, for example, there are images which are expressed by utilizing a commercially-available sound analytical program. In this sound analytical program, sounds are temporally continuously subjected toa form of frequency analysis in which the vertical axis indicates frequency distribution of sounds and the horizontal axis indicates time. The frequency distribution represents the information of such element as corresponding to a certain frequency. Therefore, images that are subject to spectrum analysis are images where frequency elements are plotted on a chart of frequency and time.

### Brief Description of Drawings

Fig. 1 is an example of a voice spectrum.
Fig. 2 is an IPA consonant table showing voiced sounds and voiceless sounds that form voices.
Fig. 3 is a spectrum of the voiced sounds, "a, i, u, e, o" at 250 Hz that are vocalized by a female voice.
Fig. 4 is a spectrum of frictional sounds made by rubbing a printed surface without gloss.
Fig. 5 is a sound spectrum of the sounds of the sh line* by a female voice.
Fig. 6 is an enlarged view showing the details of the spectrum of the sound, "sha".
In Fig. 7, (a) is a pattern diagram more specifically showing the overlap of voiced sounds and voiceless sounds of the sounds "sh" line and "s" line, (b) is a spectrum of voiceless sounds of the sounds, "t" line and the sounds, "ts" line, and (c) is a spectrum of voiceless sounds of the sounds, "k" line, "p" line, "h" line and "f" line.
Fig. 8 is a conceptual diagram showing the longitudinal section of a printing paper P (recording longitudinal section of a printing paper P (recording medium), which is glossy with a thickness of 0.3mm, on which the results of the spectrum analysis are printed by aqueous bubble jet ink.
Fig. 9 is a test pattern and a spectrum in the case the test pattern is rubbed twice.
Fig. 10 is a perspective view showing an example of sound generating means.

### Best Mode for Carrying out the Invention

When irregularities were established on the surface of the plastic plate, etc., and the experiment of whether requested sounds were obtained by rubbing those irregularities with a plastic, etc. was performed, it was found that different sounds could be obtained by establishing the various states of the surface. The sounds obtained in this way are inferior to those reproduced by a tape recorder, etc., in terms of the tone quality, but slightly changes depending en the rubbing method. Thereby, if the requested voices are capable of being expressed, a printing medium can transmit the higher value added information so that novel expressions and demands are prospected.

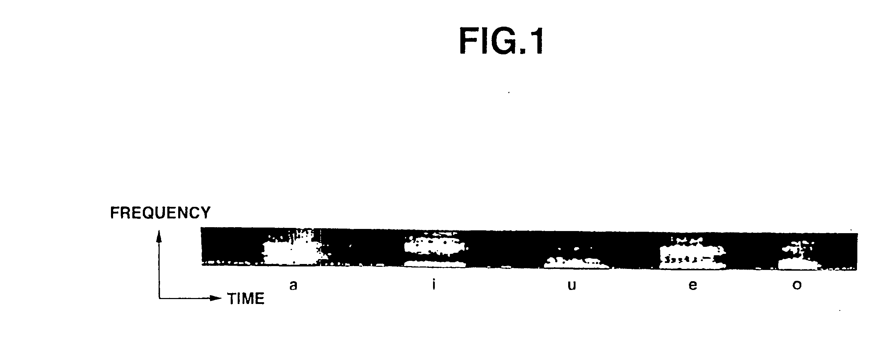

Here, a problem is how the irregularities are established so as to generate the requested sounds, and this inventor noted a sound spectrum. Here, for example as shown in Fig. 1, a horizontal axis indicates the passage of time, a vertical axis indicates the frequency, and the gradation represents the frequency elements corresponding to the time. In Fig. 1, the gradation is inverted so that it is the frequency elements shown in white which are included in those sounds.

A sound spectrum of a plastic plate and a spectrum of the human voice were compared. The surface of the plastic plate to be used was a corrugated plate whose cycle was approximately 0.5 mm, and the sound generated by rubbing such plate consisted of the frequency band from 600 Hz to 700 Hz. On the other hand, a typical female's voiceprint consists of a harmonic frequency band of 250 Hz, and there are one to three characteristic parts in the band, the color of which becomes darker depending on the strength of the words generated. It is presumed that those parts conform to the main components of the words. Both sound spectrums of the plastic plate and the human voice are common to each other in the view that they are aggregate of the elements of a plurality of sounds. Although the fine texture of those parts in the frequency band are different from each other, the basic structure of the voiceprint form is the same. The main difference is that in the case of the plastic sounds, the band is almost even and there are no characteristic part in the band that shows the strength and weakness of the sounds irrespective of the actual strength and weakness of the sounds.

When the surface of the plastic plate is stuck with a tape, the parts where the sounds rise and the parts where the sounds do not rise are alternately established on the surface at the appropriate interval, and when the surface is rubbed, a spectrum in its own way appears. When a pattern of the spectrum was examined using various materials, it was found that the pattern has a regularity. Therefore, it was noted that by interpreting the frictional sounds as a pattern of images, information of the surface of the plate to be rubbed was reflected to the sound images. As the sounds that a radar hits an object and bounces off such object are output as images, as to the human's voice print, the condition of the vocal code and oral cavity, etc. in generating voices should also be reflected in the image. It is considered that the images that are processed in accordance with the image information of the voiceprint analysis (strong and weak parts of voices) are transferred to the surface of the material, and the distinctive strong and weak parts of the voiceprint are reproduced and output from those images.

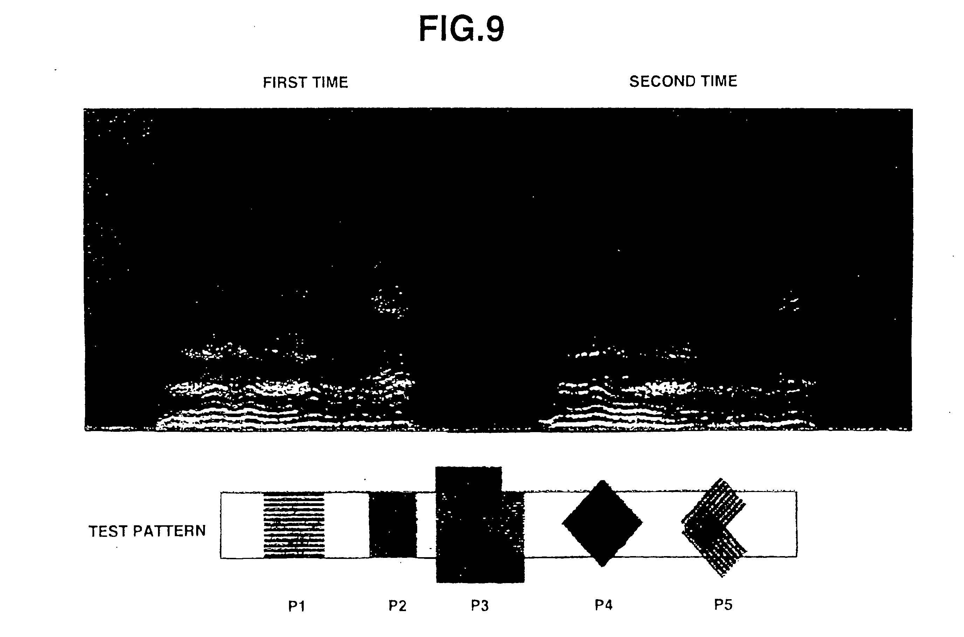

Fig. 9 shows a spectrum in the case that a test pattern, wherein geometrical design patterns of P1, P2, P3, P4 and P5 were printed, was rubbed twice. It is found that the patterns are almost the same under both instances. The above indicates that the reproduction of sounds comprising repeatability is allowed.

It can also be understood that when a graphic is drawn in a member comparatively easy to vibrate (hereinafter referred to the vibrating member) by a method of printing, etc., the vibrating characteristics of the part to be drawn changes and the vibrating characteristics resonating to the frequency elements of the voices to be expressed can be obtained by the shape or size of the graphic.

In the part of the voiced sounds, the vibration of the vocal code represented by "aiueo" is a main component, and the voices are characterized by the strength and weakness of a specific part of the frequency band. In theory, sounds can be reproduced if the sound information of the transferred images are converted into vibrations. Here, although it is reasonable to assume that the rubbed part vibrates, it was found that, in the case of the plastic plate, the rubbing part was a sound source and the plastic plate hardly vibrated to generate sounds. When various materials were used, it was found that the same frictional sounds arose upon rubbing the surface of the glossy paper with a finger, and contrary to the plastic paper, the paper vibrated (approximately 400Hz). The generation of sounds by the vibration of the rubbed part also has an advantage in that the frequency band of sounds to be generated can be arranged by changing the density = specific gravity of the materials. When the image-processed sound information was transferred to the surface by using the glossy paper (paper for color printer), which easily causes vibration, to specify the frictional part, and the printed part was vibrated by directly rubbing it with a finger to reproduce the sound, it was confirmed that the voice could be rather faithfully reproduced. The voices used as samples were, two kinds, "aiueo" and "Gokaku Omedeto", and both were vocalized by an adult female voice (approximately 250 Hz). The maximum output ability of the simplest printer is 300dpi, and as the result of the trial where that the each of the sound images were transferred at the resolutions of four stages - 72dpi, 144dpi, 200dpi and 300dpi, it was confirmed that the reproduced voices became clear in proportion to the resolution.

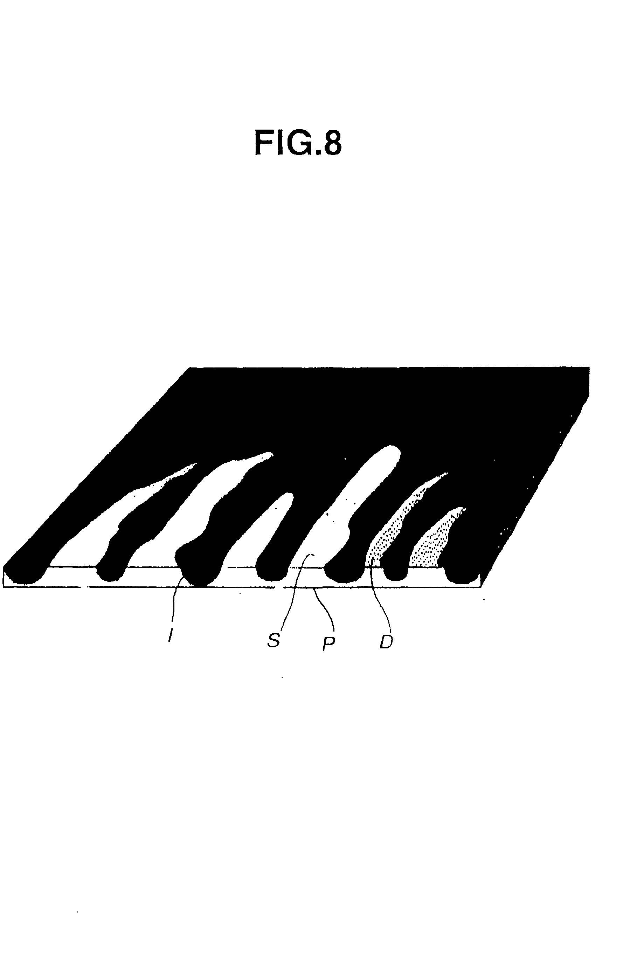

Fig. 8 is a conceptual diagram showing the longitudinal section of a printing paper P, which is glossy with a thickness of 0.3mm, on which the results of the spectrum analysis are printed by the aqueous bubble jet ink, and the ink I permeates to the inside from the surface of the paper S. In the part where the ink I is dark (indicated in black), the ink I deeply permeates the paper, and in a part where the ink I is light (indicated in dot D), the ink I barely permeates the paper. Upon rubbing those parts with a finger, the part where the ink I does not permeate (other white parts) is easy to vibrate, and the more deep the ink I permeates, the more difficult it is to cause vibration. That is, the parts where the ink I does not permeate or barely permeates operate as dummy cavities, and the three-dimensional structure emphasizing a characteristic part of a voice spectrum is formed.

Moreover, it could be confirmed that a human finger has the ability to reproduce finer image information beyond expectation. It is considered that when the printing precision arises to the degree of 1200 dpi, clearer sounds can be reproduced.

Generally, a striping of the spectrum at a certain frequency (for example 400 Hz) consists of a frequency of harmonic sound (900×n) Hz (n: integer), and these frequency elements are included in the reproduced sounds. Therefore, a printing pattern where the fundamental tone of 250 Hz is recorded includes the voice spectrum calculated by (250 ×n) (n: integer) in the frequency band, the audio frequency of which is 250 Hz to 22,050 Hz, and only the required frequency may be extracted from the reproduced sounds. This is called as a positive process. On the other hand, a method for selecting and deleting the unnecessary spectrum part in accordance with the image information of a voice spectrum (negative process) is also acceptable.

From the above results of the examination, it is preferable to proceed with the following steps.
(1) determining the intended voices and other sounds;
(2) generating and recording those sounds;
   According to the results of the experiment, it is desirable to vocalize by explicitly dividing the syllables. Moreover, the voice of a young female is better than that of a male.
(3) subjecting those sounds to spectrum analysis;
   Fig. 1 is an example of vocalizing "a, i, u, e, o".
(4) printing the results of the image-displayed spectrum analysis. As a printing method, there are methods such as offset printing or a method for applying by the bubble jet system using the aqueous ink.

The glossy paper (paper for color printer), etc. which can easily be vibrated is used. As the reproduced voices become clear in proportion to the resolution, it is desirable that printing is performed at a preferably high resolution, for example, at the degree of 1200 dpi. Furthermore, in the case of the aqueous ink, it has a characteristic that the lower the percentage of the moisture content is, the less clear the reproduced voices become, on the contrary, in the offset printing where oil based ink is employed, the tone changes little with time.

When the sound apparatus to be printed in this manner is rubbed with a finger, prescribed sounds are reproduced. The direction to be rubbed is the direction of the time axis in Fig. 1. Although the vocalized sounds are substantially different depending on the rubbing method, said sounds can be clearly heard when one becomes accustomed to those sounds.

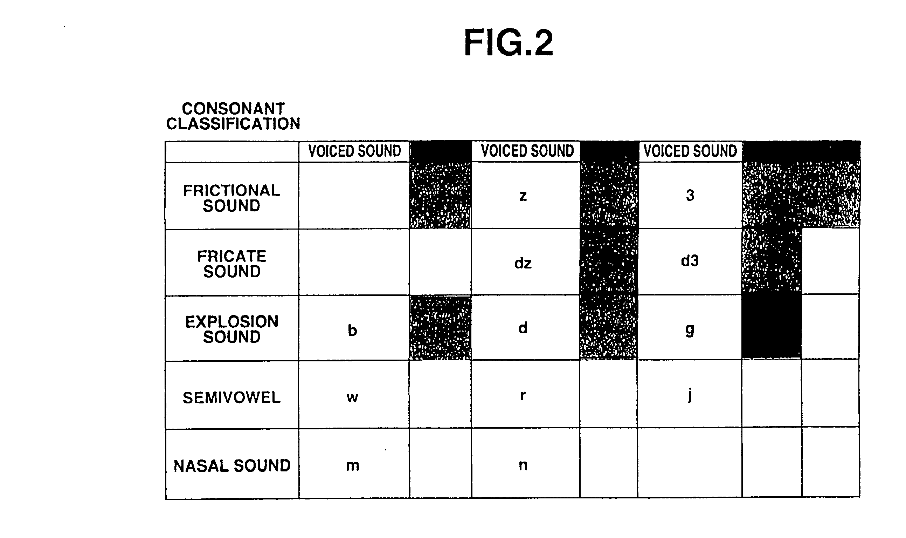

Fig. 2 is an IPA consonant table showing the voiced sounds and voiceless sounds that form voices. The voiced sounds have a regular frequency band, and the voiceless sounds have no specific frequency.

Furthermore, the voiceless consonants are the consonants without a specific frequency characteristic such as "f/p/s/ts/t/sh/tsh/k/h", etc., and in order to solve such problem, a surface finishing in contrast with the case of the voiced sounds that has no specific frequency and is hard to arise the slip stick phenomenon is conducted to reproduce the scratched sounds that are the sounds to constitute the voiceless consonants. For example, when a paper or printed surface without gloss such as a rough sandpaper, etc. was rubbed, the scratched sounds with very similar characteristics to the generated sounds were obtained.

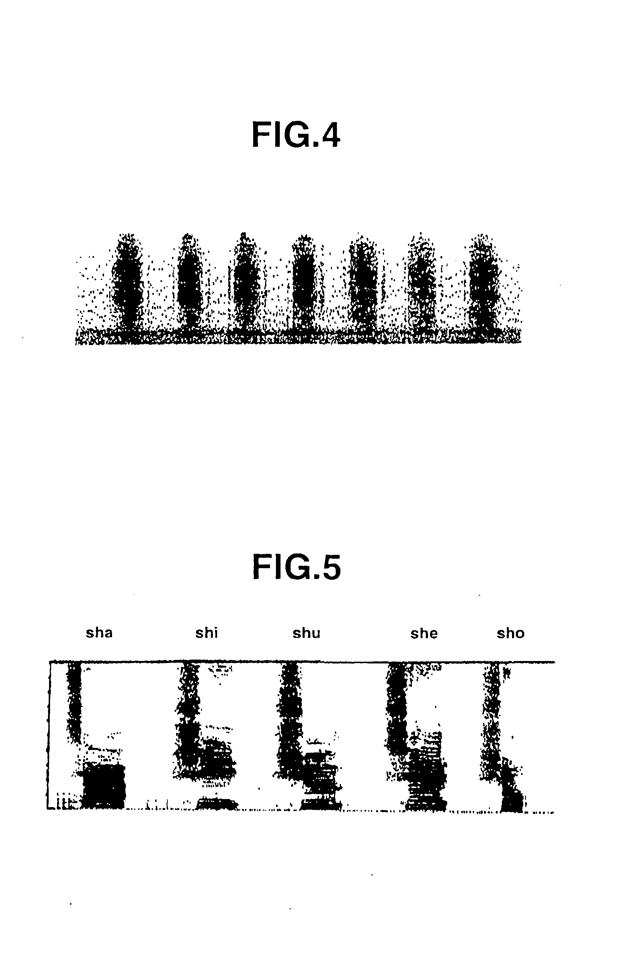

Fig. 4 shows a spectrum of the frictional sounds made by rubbing the printed surface without gloss.

Fig. 5 shows a voice spectrum upon vocalizing the sounds of the sh line in the female's voice. In such spectrum, it is found that "sha" is the overlap of a voiceless sound "sh" and a voiced sound "a", "shi" is the overlap of a voiceless sound "sh" and a voiced sound "i", "shu" is the overlap of a voiceless sound "sh" and a voiced sound "u", "she" is the overlap of a voiceless sound "sh" and a voiced sound "e", and "sho" is the overlap of a voiceless sound "sh" and a voiced sound "o".

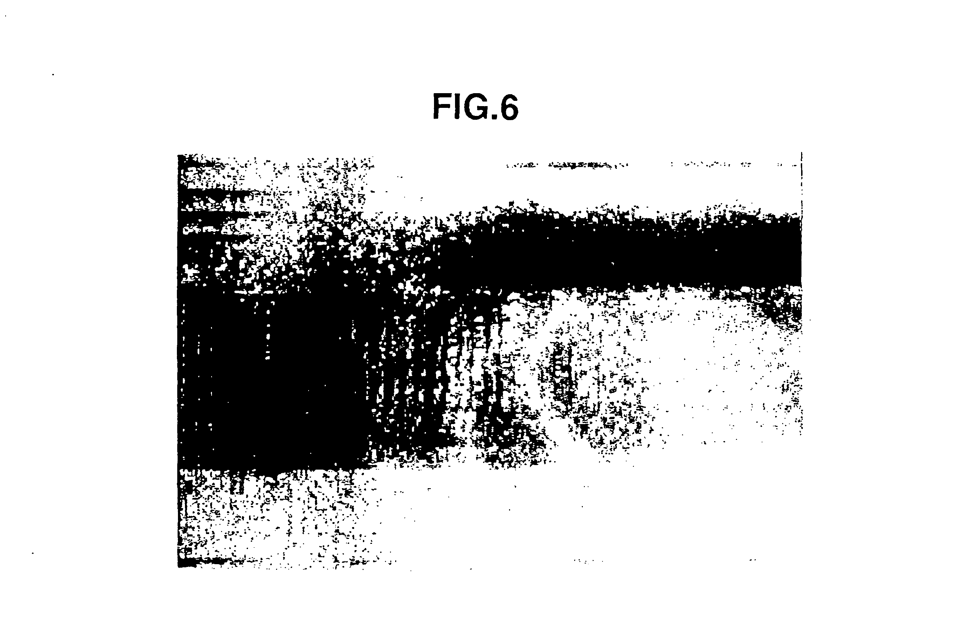

Fig. 6 is an enlarged view showing the details of the spectrum of the sound, "sha".

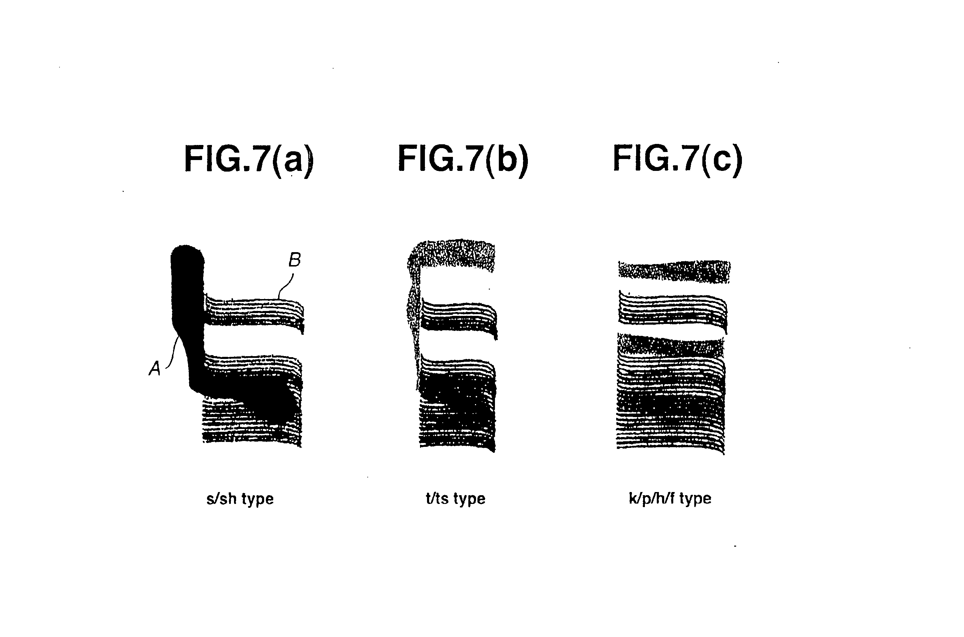

Fig. 7 (a) is a pattern diagram more specifically showing the overlap of the voiced sounds and the voiceless sounds of the "sh" line and "s" line. Part A which is blacked out in the figure is the spectrum of the voiced sounds and part B which is striped is the spectrum of the voiceless sounds.

According to the experiment where the resolution of printing by the aqueous ink such as bubble jet, etc. was changed from 72 dpi to 300 dpi, it was found that the dummy cavities clearly arose immediately after printing with a high percentage of moisture content, and thereafter, they became unclear, thus the reproduced sounds were unclear. In order to solve the problem, when the offset printing employing the oil based ink with more stability was used for production, the following result was obtained.

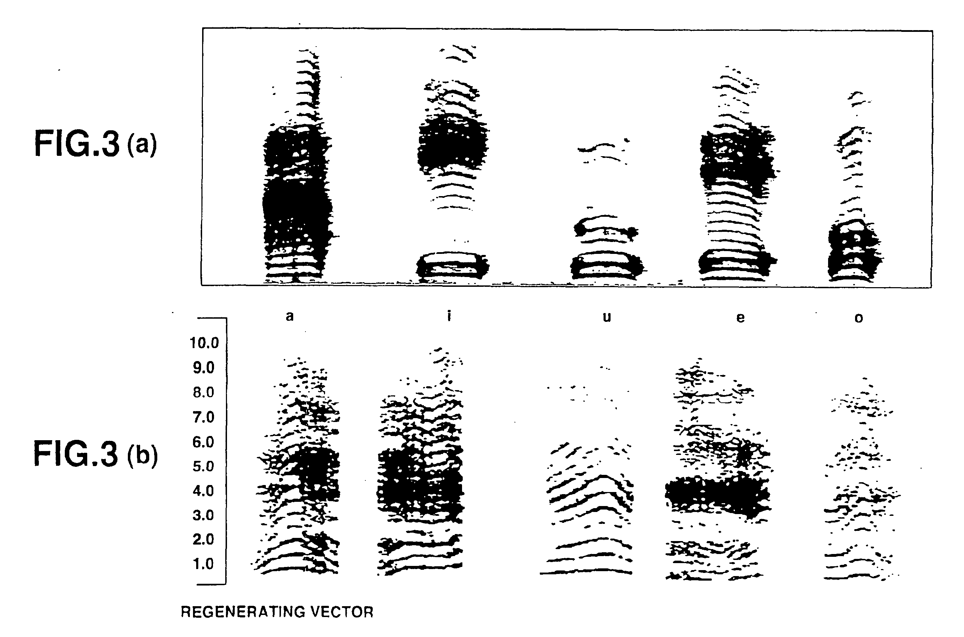

Fig. 3(a) is a spectrum of the voiced sounds, "aiueo" at 250 Hz that are vocalized by a female, and Fig. 3(b) is a spectrum of the reproduced sounds upon reproducing the sounds from images in accordance with the image information.

Therefore, in order to maintain the visibility of the reproduced sounds, it is required that some ink element replaced with water is made to permeate to the inside of the printing paper and the structure and elements such as the fiber of the printing paper are settled and stabilized to form a stable three-dimensional structure. As a result, irrespective of the long time lapse (experimentally left indoors for approximately five months), there were no effects such as the vaporization of water, thus stable output results could be obtained.

For the utilization of this invention, the following matters are considered;
(1) Magazine
   The sound apparatus is printed on a magazine to provide to readers. For example, in the edge of the magazine, the sound apparatus is printed, and sounds are generated when it is rubbed by the readers.
(2) Ruffle cartoon
   There is a ruffle cartoon where cartoon characters that are slightly different from each other are printed on a number of papers, the papers are bound up, and the movement of the characters can be enjoyed by ruffling the papers, and on the side of the papers the sound apparatus is printed. Movements of the characters can be seen and the sounds can be heard at the same time.
(3) Label of merchandize for the blind
   For the convenience of the blind, braille or irregular parts are printed on the label of cans. Alternatively, the sound apparatus of this invention can be printed on the label of goods, and by rubbing such part, a specific sound for each of the goods, for example, the brand name can be generated.

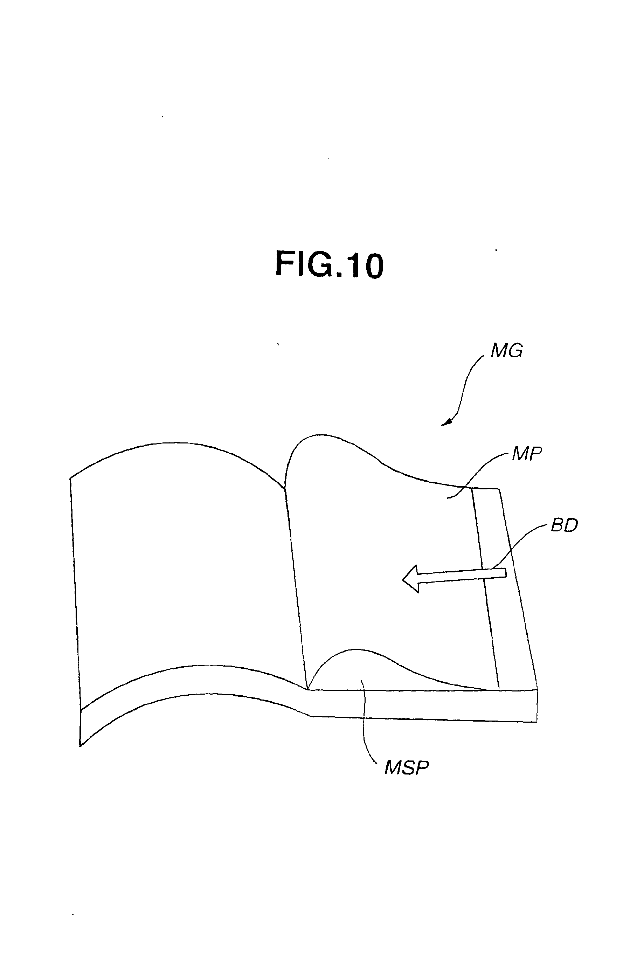

Moreover, the sound apparatus of this invention can be applied to goods with a spatial part capable of resonating sound, for example, a doll with a hollow waist, a container where goods are stored, a paper box or the like. Furthermore, if the above sound generation was conducted in articles other than solid articles, for example, where a page MP of a magazine MG, etc. was shifted to the direction of the spine BD and distorted, thereby, a space MSP shaped like a megaphone was formed (Fig. 10), a large amount of sound volume could be obtained. Accordingly, an extremely wide range of articles can be extremely easily used as the sound generator of this invention at a low price. Moreover, interest in this invention can be increased by adding the traditional visual appeal as well as the newly invented acoustic appeal to the ears to the wide range of articles, and the information transmitting ability can be improved.

### Industrial Applicability

This invention where a sound spectrum is transferred to paper, etc. by printing is capable of being produced extremely easily and at a low cost. Moreover, sounds can easily be generated by only rubbing the sound generating part with a finger, etc.

## Claims

1. A sound generator comprising a recording medium bearing a surface pattern representing sounds to be reproduced by rubbing, the recording medium being vibratable by rubbing the surface in a specific direction, so as to reproduce said sounds, **characterized in that** selected generated sounds are recorded on said recording medium in the form of a printed graphic image comprising a chart representing the results of a spectrum analysis of the selected generated sounds, in which frequency elements of the analysed sounds are plotted with respect to frequency and time, **in that** said graphic image is printed on said recording medium.

2. A sound generator as claimed in claim 1, wherein said sounds include voice and said image resulting from said spectrum analysis includes a voice print.

3. A sound generator as claimed in claim 1 or claim 2, wherein said recording medium member is paper and said image is printed on said paper using ink which permeates into the paper from the printed surface thereof, to a degree which varies so as to vary the ability of the paper to vibrate when rubbed.

4. A sound generator as claimed in any of claims 1 to 3, wherein the vibrating characteristic of the printed part of the recording medium changes as a result of the printing.

5. A sound generator as claimed in claim 3, wherein said paper is glossy paper and said graphic image is of oil based ink printed on said glossy paper.

6. A method of manufacturing a sound generator comprising a recording medium bearing a surface pattern representing sounds to be reproduced by rubbing, the recording medium being vibratable by rubbing the surface in a specific direction, so as to reproduce said sounds the method including selecting sounds to be recorded and generating the selected sounds, and being **characterized by** the steps:
subjecting the selected generated sounds to a spectrum analysis;
expressing the analysed sounds as a graphic image comprising a chart representing the results of the spectrum analysis, in which frequency elements of the analysed sound are plotted with respect to frequency and time; and
printing said graphic image on said recording medium.

## Patentansprüche

1. Tongenerator, der ein Aufzeichnungsmedium umfasst, das eine Oberflächenstruktur trägt, die Töne darstellt, die durch Reiben reproduziert werden, wobei das Aufzeichnungsmedium die Fähigkeit hat, durch Reiben der Oberfläche in einer bestimmten Richtung, zu vibrieren, um so die Töne zu reproduzieren, **dadurch gekennzeichnet, dass** ausgewählte erzeugte Töne auf dem Aufzeichnungsmedium in Form einer gedruckten grafischen Abbildung aufgezeichnet werden, die ein Schaubild umfasst, das die Ergebnisse einer Spektralanalyse der ausgewählten Töne darstellt, in welchem Frequenzelemente der analysierten Töne mit Bezug auf Frequenz und Zeit aufgezeichnet sind, und dass die grafische Abbildung auf dem Aufzeichnungsmedium aufgezeichnet wird.

2. Tongenerator nach Anspruch 1, wobei die Töne eine Stimme umfassen und die Abbildung, die aus der Spektralanalyse resultiert, einen Stimmabdruck umfasst.

3. Tongenerator nach Anspruch 1 oder 2, wobei das Aufzeichnungsmediummittel Papier ist und die Abbildung auf das Papier gedruckt wird, indem Tinte benutzt wird, die von der bedruckten Oberfläche in das Papier zu einem Grad eindringt, der sich ändert, um so die Fähigkeit des Papiers zu vibrieren, wenn es gerieben wird, zu verändern.

4. Tongenerator nach Anspruch 1 bis 3, wobei sich die vibrierenden Charakteristiken des bedruckten Teils des Aufzeichnungsmediums als Folge des Druckens ändern.

5. Tongenerator nach Anspruch 3, wobei das Papier Glanzpapier ist und die grafische Abbildung mit Tinte auf Ölbasis auf das Glanzpapier gedruckt wird.

6. Verfahren zur Herstellung eines Tongenerators, der ein Aufzeichnungsmedium umfasst, das eine Oberflächenstruktur trägt, die Töne darstellt, die durch Reiben reproduziert werden, wobei das Aufzeichnungsmedium die Fähigkeit hat, durch Reiben der Oberfläche in einer bestimmten Richtung, zu vibrieren, um so die Töne zu reproduzieren, wobei das Verfahren das Auswählen der aufzuzeichnenden Töne und das Erzeugen der ausgewählten Töne umfasst, und durch die Schritte **gekennzeichnet** ist:
Unterziehen der ausgewählten erzeugten Töne einer Spektralanalyse;
Ausdrücken der analysierten Töne als eine grafische Abbildung, die ein Schaubild umfasst, das die Ergebnisse der Spektralanalyse darstellt, in welchem Frequenz und Zeit aufgezeichnet sind; und
Drucken der grafischen Abbildung auf das Aufzeichnungsmedium.

## Revendications

1. Générateur de sons comprenant un support d'enregistrement supportant une configuration de surface représentant des sons à reproduire par frottement, le support d'enregistrement pouvant être mis en vibrations en frottant la surface dans une direction spécifique de façon à reproduire lesdits sons, **caractérisé en ce que** les sons générés sélectionnés sont enregistrés sur ledit support d'enregistrement sous la forme d'une image graphique imprimée comprenant un diagramme représentant les résultats d'une analyse spectrale des sons générés sélectionnés, dans lequel des éléments de fréquence des sons analysés sont enregistrés en fonction des fréquences et du temps, **en ce que** ladite image graphique est imprimée sur ledit support d'enregistrement.

2. Générateur de sons selon la revendication 1, dans lequel lesdits sons incluent la voix et ladite image résultant de ladite analyse spectrale inclut une impression vocale.

3. Générateur de sons selon la revendication 1 ou la revendication 2, dans lequel ledit élément de support d'enregistrement est du papier et ladite image est imprimée sur ledit papier en utilisant une encre qui imprègne ledit papier à partir de sa surface imprimée, à un degré qui varie de façon à modifier la capacité du papier à vibrer lorsqu'il est frotté.

4. Générateur de sons selon l'une quelconque des revendications 1 à 3, dans lequel la caractéristique de vibration de la partie imprimée du support d'enregistrement varie en fonction de l'impression.

5. Générateur de sons selon la revendication 3, dans lequel ledit papier est un papier brillant et ladite image graphique est faite d'une encre à base d'huile, imprimée sur ledit papier brillant.

6. Procédé de fabrication d'un générateur de sons comprenant un support d'enregistrement supportant une configuration de surface représentant des sons à reproduire par frottement, le support d'enregistrement pouvant être mis en vibrations en frottant la surface dans une direction spécifique, de façon à reproduire lesdits sons, le procédé incluant de sélectionner des sons à enregistrer et à générer les sons sélectionnés, et étant **caractérisé par** les étapes consistant à :
soumettre les sons générés sélectionnés à une analyse spectrale ;
exprimer les sons analysés sous la forme d'une image graphique comprenant un graphe représentant les résultats de l'analyse spectrale, dans lequel des éléments de fréquence du son analysé sont enregistrés en fonction des fréquences et du temps ; et
imprimer ladite image graphique sur ledit support d'enregistrement.
